# EUROPÄISCHE PATENTSCHRIFT

(11) **EP 3 450 066 B1**
(45) Veröffentlichungstag und Bekanntmachung des Hinweises auf die Patenterteilung: **18.10.2023**
(21) Anmeldenummer: 17188399.4
(22) Anmeldetag: 29.08.2017
(51) Int. Cl.: B23B 31/177, B23B 31/171

(54) **AUSGLEICHENDES KRAFTSPANNFUTTER**
COMPENSATING CLAMPING CHUCK
MANDRIN DE COMPENSATION ACTIONNÉ MÉCANIQUEMENT

(43) Veröffentlichungstag der Anmeldung: 06.03.2019
(73) Patentinhaber: HVM Technology GmbH, 28876 Oyten (DE)
(72) Erfinder: Henke, Volker, 28876 Oyten (DE)
(74) Vertreter: Eisenführ Speiser

(56) Entgegenhaltungen:
- WO-A1-80/00427
- DE-B3-102015 102 100
- US-A- 2 780 470
- US-A1- 2014 097 581

## Beschreibung

Die Erfindung betrifft ein Ausgleichsspannfutter, mit einem Gehäuse, in dem eine Antriebseinheit mit einer in Richtung einer Spannachse beweglichen Zugführung angeordnet ist, und zwei Paar einander diametral gegenüberliegende Grundbacken angeordnet sind, wobei die Grundbacken im Wesentlichen senkrecht zu der Spannachse, vorzugsweise radial, beweglich im Gehäuse geführt sind, und die Antriebseinheit dazu eingerichtet ist, die Bewegung der Zugführung in die Bewegung der Grundbacken umzusetzen, wobei die Antriebseinheit zwei Paar diametral gegenüberliegend angeordnete Schieber aufweist, wobei jeder Schieber mit einer Grundbacke gekoppelt und zu deren Bewegung eingerichtet ist. So ein Ausgleichsspannfutter ist aus der DE 10 2015 102100 B3 bekannt.

Ausgleichende Spannfutter der eingangs bezeichneten Art sind beispielsweise aus EP 3028794 A1 bekannt, und vorzugsweise zum zentrischen Einspannen von Werkstücken eingerichtet. Das erfindungsgemäße Spannfutter betrifft ein zentrisch spannendes Spannfutter.

Spannfutter der eingangs bezeichneten Art werden auch als Vierbackenfutter bzw. Vierbackenspannfutter bezeichnet. Spannfutter zum zentrischen Spannen sind grundsätzlich immer dann erforderlich, wenn Werkstücke in Werkzeugmaschinen zur maschinellen Bearbeitung eingespannt werden müssen, insbesondere wenn jene rotatorisch bearbeitet werden. In modernen Fertigungsumgebungen gibt es zunehmend Bedarf nach Spannvorrichtungen, die sowohl zum Drehen als auch zum Fräsen eingesetzt werden können.

Ein Grund, über den Einsatz von Vierbackenfuttern gegenüber konventionellen Dreibackenfuttern nachzudenken, liegt darin, dass bei einer höheren Anzahl von Spannbacken, die das Werkstück umgreifen, die Punktlast auf jede einzelne Spannbacke reduziert wird. Infolgedessen werden bei größerer Anzahl von Spannbacken die auf das Werkstück wirkenden und das Werkstück folglich deformierenden Kräfte gleichmäßiger über den Umfang des Werkstücks verteilt. Hierdurch steigt die Maßhaltigkeit des Werkstücks nach Bearbeitung.

Aus dem Stand der Technik sind Vierbackenspannfutter bekannt. Aufgrund eines fehlenden oder ungenügenden Ausgleichs bezüglich der Werkstückgeometrien kommt es dort zu statischer Überbestimmtheit beim Spannen.

Es sind aus dem Stand der Technik, beispielsweise unter EP 3028794 A1 Vierbacken-Ausgleichsspannfutter bekannt, welche mit hoher Wiederholgenauigkeit exakt zentrisch spannen und ausgleichen können.

Die Ausgleichsfunktion wird bei jenen Spannfuttern erreicht, indem die Zugführung, welche die Zugkraft einer Spanneinrichtung auf die Schieber überträgt, zugleich die Schieber gleitbeweglich führt und um die Spannachse herum rotatorisch im Gehäuse gelagert ist. Die Schieber sind außenliegend zusätzlich drehbar miteinander gekoppelt. Trotz im Allgemeinen zufriedenstellender Funktionsweise, die gegenüber dem konventionellen Stand der Technik der ausgleichenden Spannfutter bereits einen deutlichen Fortschritt darstellt, besteht dennoch weiterer Verbesserungsbedarf, insbesondere hinsichtlich des Wirkungsgrads der Kraftübertragung. Ferner bestand das Bestreben, ein Spannfutter zu entwickeln, welches eine kompaktere Bauweise bei unverminderter oder gesteigerter Festigkeit ermöglicht. Dies sollte erreicht werden, ohne die Wiederholgenauigkeit des Spannfutters negativ zu beeinflussen.

Vor diesem Hintergrund lag der Erfindung die Aufgabe zugrunde, ein Spannfutter der eingangs bezeichneten Art dahingehend zu verbessern, dass die im Stand der Technik aufgefundenen Nachteile möglichst weitgehend überwunden werden. Insbesondere lag der Erfindung die Aufgabe zugrunde, ein Ausgleichsspannfutter der eingangs gezeigten Art dahingehend weiterzuentwickeln, dass die Wiederholgenauigkeit verbessert wird, und möglichst weiterhin eine kompakte Bauform bei zumindest annähernd gleichbleibender

### Geänderte Beschreibungsseite (Reinschrift)

Kraftübertragung erreicht wird. Zumindest lag der Erfindung die Aufgabe zugrunde, ein alternatives Ausgleichsspannfutter anzugeben.

Die Erfindung löst die ihr zugrundeliegende Aufgabe mit den Merkmalen des Anspruchs 1. Es ist im Rahmen der Erfindung erkannt worden, dass die aus dem Stand der Technik vorbekannte Konstruktionsweise betreffend die rotatorisch gelagerte Zugführung mit in ihr gelagerten Schiebern zum Realisieren der Ausgleichsbewegung vergleichsweise viel träge Masse in Bewegung versetzen musste, nämlich die Zugführung selbst nebst aller Schieber. Dies führte dazu, dass große Teile des mechanischen Innenlebens des Ausgleichsspannfutters für die Ausgleichsbewegung in Bewegung versetzt werden mussten.

Hier setzt die Erfindung an, in dem sie die Ausgleichsfunktion von der Zugführung isoliert und in ein separates Ausgleichselement auslagert, welches zwischen Zugführung und Schieber zwischengeschaltet ist. Das Ausgleichselement muss daher erfindungsgemäß nicht mehr die Schieber lagern, sondern ausschließlich die Ausgleichsbewegung relativ zueinander auslösen. Das bewirkt, dass die Führungselemente der Schieber stationär im Gehäuse angebracht werden können, wodurch eine höhere Steifigkeit des Gehäuses und eine Verringerung der bei der Ausgleichsbewegung bewegten trägen Masse erzielt wird. Dadurch steigt auch die Wiederholgenauigkeit hinsichtlich der Zentrizität der Spannvorgänge.

Die Erfindung wird vorteilhaft weitergebildet, in dem das Ausgleichselement ringförmig ausgebildet ist. Das Ausgleichselement ist vorzugsweise als drehbar an der Zugführung gelagerter ein- oder mehrteiliger Ring ausgebildet.

Dadurch, dass die Gleitflächen, welche die Zugbewegung der Zugführung auf die Schieber übertragen, umfangsseitig an dem mit der Zugführung gekoppelten Ausgleichselement beziehungsweise an den korrespondierenden

Gegenflächen der Schieber ausgebildet sind, wird die Effizienz der Kraftübertragung und Bewegungseinleitung für die Ausgleichsfunktion gegenüber dem Stand der Technik verbessert. Die Ausgestaltung ermöglicht zudem durch Wahl des passenden Steigungswinkels der helixförmigen Gleitflächen und entsprechender Dimensionierung des Ausgleichselements in Richtung der Spannachse einen sehr großen Ausgleichsbereich für die Schieber und somit für die Grundbacken des Spannfutters. Vorzugsweise ist der maximale Ausgleichsweg der Grundbacken mindestens im Wesentlichen gleich dem nominalen Verstellweg der Grundbacken für den Spannvorgang.

Die helixförmigen Gleitflächen weisen in einer bevorzugten Ausführungsform für das erste Schieberpaar eine erste Steigung auf, und für das zweite Schieberpaar eine gegenläufige zweite Steigung, die vorzugsweise betragsmäßig gleich der ersten Steigung ist.

In einer weiteren bevorzugten Ausführungsform sind die Schieber axial beweglich in dem Gehäuse geführt. Insbesondere sind die Schieber ausschließlich axial beweglich in dem Gehäuse geführt. Eine Bewegung der Zugführung in Richtung der Spannachse wird mittels es Ausgleichsrings auf die Schieber übertragen und resultiert in einer ebenfalls axialen Bewegung der Schieber in Richtung der Spannachse beim Spannvorgang sowie beim Lösevorgang.

Vorzugsweise sind die Schieber und die Grundbacken mittels paarweise zentrisch auf die Spannachse zulaufender Gleitflächen miteinander gekoppelt, so dass die Bewegung der Schieber in Richtung der Spannachse in die radiale Bewegung der Grundbacken umgesetzt wird. Das Verhältnis zwischen der axialen Bewegung der Schieber und der radialen Bewegungskomponente der Grundbacken wird über den Winkel definiert, den die Gleitflächen zwischen Schiebern und Grundbacken mit der Spannachse einschließen. Je spitzer der Winkel ausgewählt wird, desto höher ist die von den Grundbacken ausgeübte Spannkraft, desto geringer wird aber auch der von den Grundbacken im Verhältnis zu Schiebebewegung zurückgelegte Spannweg.

Die vorstehend beschriebene bevorzugte Ausführungsform stellt darauf ab, dass die Grundbacken selbst mit entsprechenden Gleitflächen versehen sind, um von den Schiebern in radialer Richtung bewegt zu werden. In einer gleichermaßen bevorzugten alternativen Ausführungsform sind die Schieber erste Schieber, und das Spannfutter weist zwei Paar zweite Schieber auf, die jeweils mit einem der ersten Schieber gekoppelt und radial beweglich in dem Gehäuse geführt sind, wobei die Grundbacken jeweils ein Grundbackenelement aufweisen, das jeweils reversibel lösbar an einem der zweiten Schiebern montiert ist. Diese Ausführungsform ermöglicht eine Trennung der Grundbacken von der Antriebseinheit und ermöglicht es, die Grundbacken schnell auszutauschen, ohne hierbei in die Antriebseinheit eingreifen zu müssen, zu der die Schieber gehören. Hierdurch werden die anfallenden Rüstzeiten verkürzt.

Auch in dieser alternativen Ausführungsform sind vorzugsweise die ersten Schieber und die zweiten Schieber mittels paarweise zentrisch auf die Spannachse zulaufender Gleitflächen miteinander gekoppelt, so dass die Bewegung der ersten Schieber in die radiale Bewegung der zweiten Schieber umgesetzt wird.

In einer weiteren bevorzugten Ausführungsform des erfindungsgemäßen Spannfutters sind die Schieber, insbesondere die ersten und/oder zweiten Schieber, je nach bevorzugter Ausführungsform, unabhängig voneinander gleitbeweglich im Gehäuse gelagert. Weiter vorzugsweise sind die Schieber voneinander beabstandet mit dem Ausgleichsring gekoppelt. Die individuelle Lagerung der Schieber und insbesondere die Beabstandung der Schieber voneinander verbessert die Montage und Demontage der Antriebseinheit des Spannfutters.

Die Erfindung wird im Folgenden anhand eines bevorzugten Ausführungsbeispiels unter Bezugnahme auf die beigefügten Figuren näher erläutert. Hierbei zeigen:
- Figur 1: eine erste räumliche Ansicht eines Spannfutters gemäß einem bevorzugten Ausführungsbeispiel,
- Figur 2: eine räumliche Ansicht des Spannfutters gemäß Figur 1 in einem teilmontierten Zustand,
- Figur 3: eine weitere räumliche Ansicht des Spannfutters gemäß den Figuren 1 und 2 in einem weiteren teilmontierten Zustand,
- Figur 4: eine räumliche Ansicht des Spannfutters gemäß den Figuren 1 bis 3 in einer Explosionsansicht,
- Figur 5: eine Detailansicht zu Figur 4,
- Figur 6: eine weitere Detailansicht zu Figur 4,
- Figur 7: eine Detailansicht des Spannfutters gemäß den Figuren 1 bis 6 mit einer alternativen Grundbacke, und
- Figur 8: eine Detailansicht des Spannfutters gemäß den Figuren 1 bis 7 mit einem Fliehkraftausgleich.

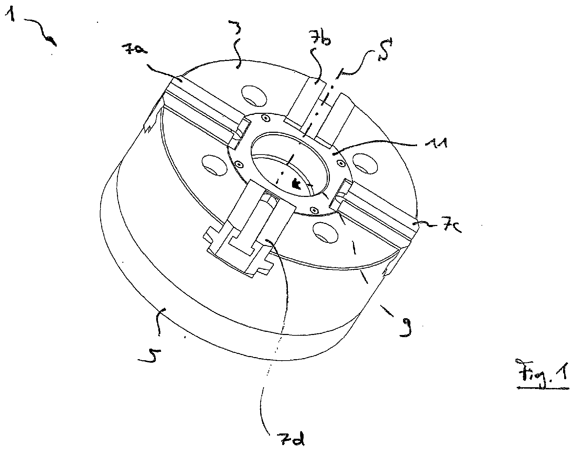

Figur 1 zeigt zunächst ein Ausgleichsspannfutter 1 gemäß einem bevorzugten Ausführungsbeispiel der vorliegenden Erfindung. Das Ausgleichsspannfutter 1 weist ein Gehäuse 3 auf. Vorzugsweise ist das Gehäuse 3 auf einem Gehäuseunterteil 5 montiert. Das Gehäuseunterteil 5 wiederum ist zur Montage an einer Werkzeugmaschine vorbereitet. In dem Gehäuse 3 sind jeweils Führungen vorgesehen, in denen insgesamt vier Grundbacken 7a-d beweglich geführt aufgenommen sind. Die Grundbacken 7a, 7c bilden ein erstes Grundbackenpaar, während die Grundbacken 7b, 7d ein zweites Grundbackenpaar bilden. Die Grundbacken eines jeweiligen Paares 7a,c und 7b,d sind jeweils einander diametral gegenüberliegend angeordnet.

Das in den Figuren gezeigte Ausgleichsspannfutter 1 ist als Kraftspannfutter ausgebildet. Alternativ zum Antrieb mittels Kraftspannung liegt ein Ausgleichsspannfutter mit einer Antriebseinheit, die die nachfolgend beschriebene Kinematik aufweist, aber mittels Handspannung betätigt wird, ebenso im Rahmen der Erfindung.

Das Gehäuse 3 umhaust eine Antriebseinheit 9, die eine Spannbewegung eines Zugrohres oder - je nach Ausführung - einer Zugstange in Richtung einer Spannachse S umsetzt in eine radiale Bewegung der Grundbackenpaare 7a,c und 7b,d zentrisch aufeinander zu bzw. voneinander weg. Der innere Aufbau der Antriebseinheit 9 ergibt sich aus den folgenden Figuren.

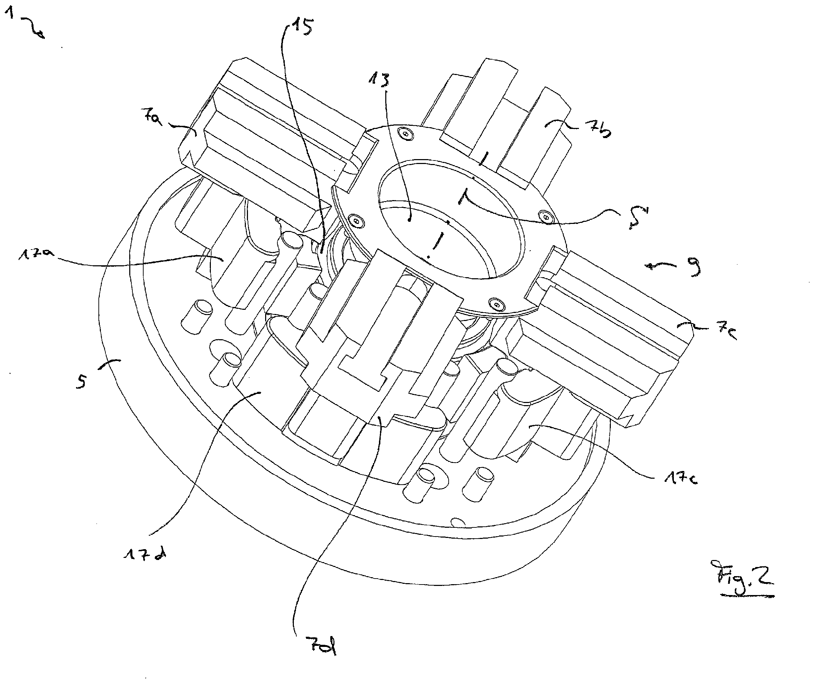

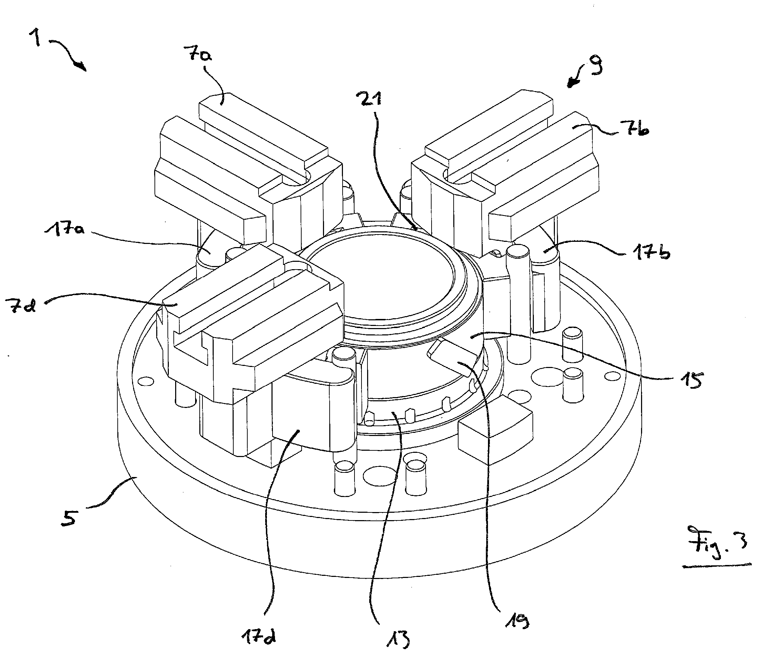

In Figur 2 ist das Ausgleichsspannfutter 1 ohne das Gehäuse 3 dargestellt. Im Inneren des Ausgleichsspannfutter 1 ist die Zugführung 13 angeordnet. Die Zugführung 13 ist mit einem Ausgleichselement 15 gekoppelt, welches zur Kraftübertragung von der Zugführung 13 auf insgesamt vier axial beweglich geführte Schieber 17a-d eingerichtet ist (vgl. Figur 3). Das Ausgleichselement 15 ist drehbar an der Zugführung 13 gelagert und sorgt dafür, dass bei einer rotationsfreien Bewegung des Ausgleichselements 15 alle Schieber 17a-d synchron gleichsinnig zu der Zugführung 13 bewegt werden. Bei einer Rotation des Ausgleichselements 15 relativ zur Zugführung 13 um die Spannachse S herum wird eine Relativbewegung benachbarter Schieber bewirkt. Einander gegenüberliegende Schieber 17a,c bilden ein erstes Schieberpaar, und die einander gegenüberliegenden Schieber 17b,d bilden ein zweites Schieberpaar. Die Schieber innerhalb eines Schieberpaares 17a,c; 17b,d werden von dem Ausgleichselement 15 immer synchron bewegt. Auf die Kinematik der Ausgleichsbewegung wird im Folgenden näher eingegangen.

Die Schieber 17a-d sind jeweils mit einer der Grundbacken 7a-d gekoppelt, derart, dass die Axialbewegung der Schieber 17a-d in Richtung der Spannachse S umgesetzt wird in eine Radialbewegung der Grundbacken auf die Spannachse S zu bzw. von ihr weg.

Wie sich aus Figur 3 erkennen lässt, sind an dem Ausgleichselement 15 mehrere, nämlich insgesamt vier, helixförmig verlaufende Vorsprünge 19 ausgebildet, die Gleitflächen aufweisen und dazu eingerichtet sind, mit korrespondierenden helixförmigen Ausnehmungen 21 in den Schiebern 17a-d nach Art einer Kulissenführung zusammenzuwirken.

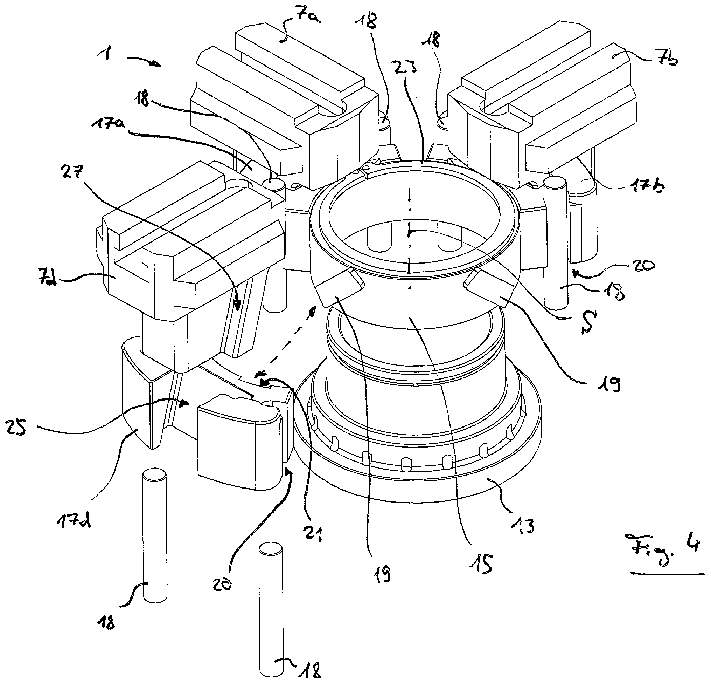

Wie sich aus Figur 4 ergibt, weisen die helixförmigen Gleitflächen für das erste Schieberpaar 17a,c eine erste, gleichsinnige Steigung auf, während die helixförmigen Gleitflächen der Vorsprünge und Ausnehmungen 19, 21 für das zweite Schieberpaar 17 b,d eine gegenläufige Steigung vorzugsweise gleichen Betrags aufweisen. Die gegenläufige Ausrichtung der helixförmigen Vorsprünge bzw. Ausnehmungen sorgt dafür, dass das Ausgleichselement 15, welches optional mittels eines Spannrings 23 an der Zugführung 13 in Richtung der Spannachse S gehalten wird, das Ausgleichsspiel der Grundbacken 7a-d regelt, wie sich aus den folgenden Figuren ergibt.

Noch in Figur 4 ist allerdings die Kopplung zwischen den Schiebern 17a-d und den Grundbacken 7a-d zumindest für die Grundbacke 7d und den Schieber 17d gezeigt: An der Grundbacke 7d ist ein Vorsprung 27 mit zentrisch auf die Spannachse S zulaufenden Gleitflächen ausgebildet, der in eine korrespondierende Ausnehmung 25 nach Art eines Keilhakens in dem Schieber 17b eingreift. Die Ausrichtung der korrespondierenden Gleitflächen der Vorsprünge 27 und Ausnehmungen 25 sorgt dafür, dass die Axialbewegung des Schiebers 17d in eine Radialbewegung der Grundbacke 7d umgesetzt wird. Die Kinematik ist bei den übrigen Schiebern 17a-c und Grundbacken 7a-c die gleiche.

Die Schieber 17 a-d sind in dem Gehäuse 3 axial geführt beweglich. Im gezeigten Ausführungsbeispiel ist die Führung mittels jeweils einer oder mehrerer Führungsstäbe 18 realisiert, die in korrespondierend ausgeformte Aufnahmen 20 in den Schiebern eingreifen und ein kippfreies Gleiten der Schieber parallel zur Spannachse S ermöglichen. Alternative, ebenfalls von der Erfindung umfasste Führungsarten umfassen beispielsweise eine gleitbewegliche Führung entlang von Gleitflächen in dem Gehäuse 3.

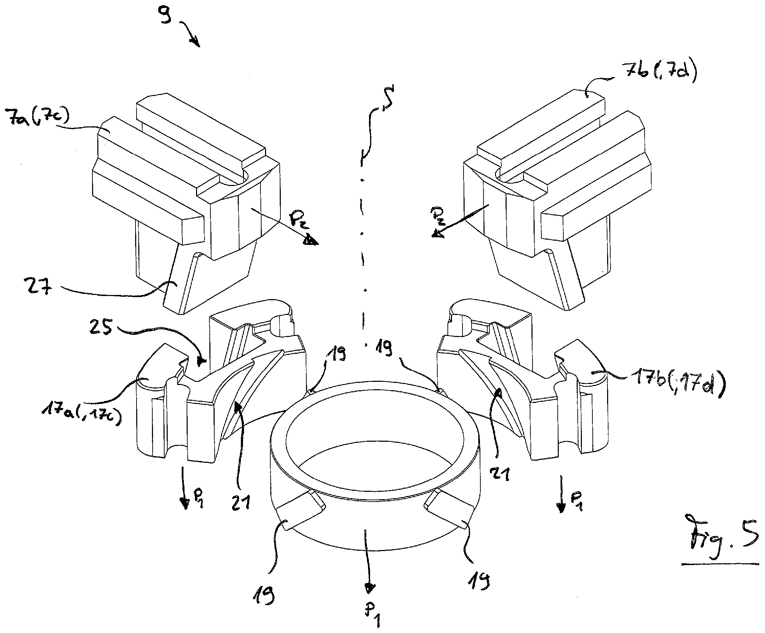

In Figur 5 ist sinnbildlich anhand eines Details der Explosionsdarstellung gemäß Figur 4 die rotationsfreie Spannbewegung dargestellt. Wird die Zugführung 13 und mit ihr das Ausgleichselement 15 in Richtung des Pfeils P₁, der parallel zur Spannachse S verläuft, bewegt, werden auch die Schieber 17a-d mit bewegt. Zwischen den helixförmigen Gleitflächen der Vorsprünge 19 und Ausnehmungen 21 herrscht dann Haftreibung. Infolge der Bewegung der Schieber 17a-d in Richtung der Pfeile P₁ gleiten die Vorsprünge 27 in den korrespondierenden Ausnehmungen 25 der Schieber 17a-d und sorgen für eine radiale Bewegung der Grundbacken 7a-d in Richtung der Pfeile P₂ auf die Spannachse S zu.

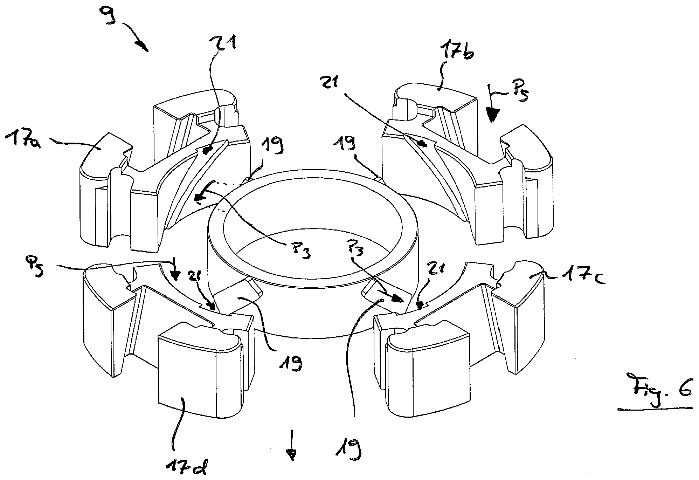

Nachdem in Figur 5 die "normale" Spannbewegung der Schieber 17a-d gezeigt wurde, wird nun in Figur 6 die Ausgleichsbewegung veranschaulicht. Es soll zur Verdeutlichung davon ausgegangen werden, dass beim Spannvorgang die Grundbacken 7a und 7c durch Anlage an ein Werkstück während des Spannvorgangs gestoppt werden. Durch das Anliegen an dem Werkstück ist eine Weiterbewegung der Grundbacken 7a, 7c nicht mehr möglich. Deswegen werden auch die Axialschieber 17a, 17c an ihrer Weiterbewegung gehindert. Da aber nach wie vor Kraft über die Zugführung 13 auf das Ausgleichselement 15 ausgeübt wird in Richtung der Spannachse S, geht der Zustand der Haftreibung zwischen den helixförmigen Gleitflächen der Vorsprünge 19 und Ausnehmungen 21 nun über in Gleitreibung. Die Vorsprünge 19, welche mit den Ausnehmungen 21 der Schieber 17a, 17c in Eingriff stehen, gleiten in diesen Ausnehmungen in Richtung der Pfeile P₃ ab, so dass das Ausgleichselement 15 in Rotation versetzt wird du sich spiralförmig in Richtung des Pfeils P₄ fortbewegt. Die übrigen Mitnehmer 19 gehen diese Spiralbewegung zwangsläufig mit. Da aber die Vorsprünge 19 und Ausnehmungen 21 für das zweite Schieberpaar 17b, 17d gegenläufig zu dem ersten Schieberpaar 17a, 17c ausgerichtet sind, verharren die Schieber des zweiten Schieberpaares 17b, 17d nicht stationär, sondern werden in Richtung der Pfeile P₅ durch das Ausgleichselement 15 abwärts getrieben, bis auch sie in Anlage an das Werkstück gelangen. Analog würde sich der Vorgang vollziehen, wenn nicht das erste Schieberpaar 17a,c sondern das zweite Schieberpaar 17b,d zuerst durch in Anlage geratenden entsprechenden Grundbacken mit dem Werkstück arretiert wird.

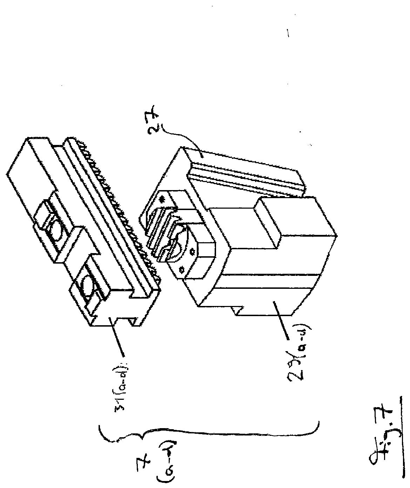

In den Figuren 1 bis 6 wurde der Übersichtlichkeit zuliebe stets eine einteilige Grundbacke 7a-d mit daran ausgebildeten Gleitflächen in Form von Vorsprüngen 27 zur Interaktion mit den korrespondierenden Schiebern 17a-d und deren Ausnehmungen 25 gezeigt. Gemäß einer bevorzugten optionalen Weiterbildung, die in Figur 7 gezeigt ist, ist die Grundbacke 7 auch leicht modifiziert als Grundbackenelement 31a-d, welches reversibel lösbar an einem Schieber 29a-d montiert wird. In dieser Weiterbildung stellt sich die Nomenklatur des Ausgleichsspannfutters 1 so dar, dass die Schieber 17a-d als erste Schieber zu verstehen sind, während die Schieber 29a-d als zweite Schieber definiert werden, die mit den ersten Schiebern 17a-d derart gekoppelt sind, dass eine Axialbewegung der ersten Schieber 17a-d in eine Radialbewegung der zweiten Schieber 29a-d umgesetzt wird. Die grundsätzliche Kinematik gleicht hierbei der in den Figuren 1 bis 6 beschriebenen Funktionsweise. Diese Ausgestaltung bringt den zusätzlichen Vorteil mit sich, dass die Grundbackenelemente 31a-d schnell gewechselt werden können, ohne hierbei die Antriebseinheit 9 modifizieren zu müssen, was zu kürzeren Rüstzeiten führt.

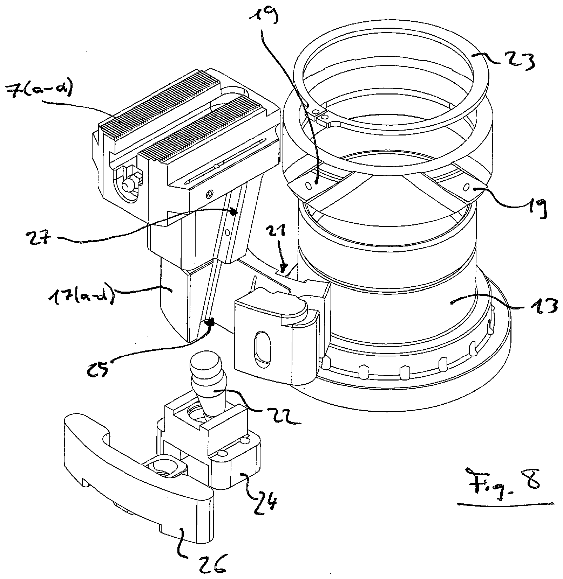

In Figur 8 ist eine weitere Ausbaustufe des erfindungsgemäßen Ausgleichsspannfutters 1 gezeigt. Zusätzlich zu den weiter oben bereits beschriebenen Merkmalen sind hier die Schieber 17 a-d jeweils mit einem Schwinghebel 22 gekoppelt. Der Schwinghebel 22 ist mittels einer an dem Gehäuse 3 montierten Buchse 24 schwenkbar gelagert. Gegenüberliegend zu dem Schieber 17 a-d ist der Schwinghebel 22 mit einem Gegengewicht 26 gekoppelt. Hebelarme und Massen des Schwinghebels 22 und des Gegengewichts sind vorzugsweise derart an die Masse des Schiebers 17 a-.d und der Grundbacke 7 a-d angepasst, dass die bei einer Rotationsbewegung des Spannfutters 1 wirkenden Zentrifugalkräfte sich zumindest partiell gegenseitig aufheben, um einem Spannkraftverlust entgegenzuwirken. Zur Vermeidung von Wiederholungen wird hinsichtlich der übrigen Bezugszeichen auf die erläuterungen zu den Figuren 1 bis 7 verwiesen.

## Patentansprüche

1. Ausgleichsspannfutter (1), mit
einem Gehäuse (3), in dem eine Antriebseinheit (9) mit einer in Richtung einer Spannachse (S) beweglichen Zugführung (13) angeordnet ist, und
zwei Paar einander diametral gegenüberliegender Grundbacken (7a, c; 7b, d) angeordnet sind, wobei
die Grundbacken (7a - d) im Wesentlichen senkrecht zu der Spannachse (S), vorzugsweise radial, beweglich in dem Gehäuse geführt sind, und
die Antriebseinheit (9) dazu eingerichtet ist, die Bewegung der Zugführung (13) in die Bewegung der Grundbacken (7a - d) umzusetzen,
wobei die Antriebseinheit (9) zwei Paar diametral gegenüberliegend angeordneter Schieber (17a,c; 17b,d) aufweist, wobei jeder Schieber (17a-d) mit einer Grundbacke (7a-d) zur Kraftübertragung auf die Grundbacke (7a-d) gekoppelt ist,
wobei die Schieber (17a-d) mittels eines um die Spannachse (S) relativ zu der Zugführung (13) drehbaren Ausgleichselements (15) mit der Zugführung (13) gekoppelt sind, wobei das Ausgleichselement (15) dazu eingerichtet ist, bei einer rotationsfreien Bewegung eine synchrone Bewegung der beiden Schieberpaare (17a,c; 17b,d) zu bewirken, **dadurch gekennzeichnet, dass** das Ausgleichselement (15) ferner dazu eingerichtet ist, bei einer Drehbewegung relativ zu der Zugführung eine Relativbewegung des zweiten Schieberpaares (17b, d) relativ zu dem ersten Schieberpaar (17a, c) zu bewirken,
wobei das Ausgleichselement (15) und die Schieber (17a-d) mittels umfangsseitig angeordneter Gleitflächen (19, 21) gekoppelt sind, die helixförmig um die Spannachse (S) herum verlaufen und an dem Ausgleichselement (15) und/oder an den Schiebern ausgebildet sind, und wobei die Gleitflächen (21) als helixförmige Ausnehmungen an dem Ausgleichselement (15) oder den Schiebern (17a-d) ausgebildet sind; und/oder wobei die Gleitflächen als helixförmige Vorsprünge (19) an dem Ausgleichselement oder den Schiebern ausgebildet sind.

2. Ausgleichsspannfutter (1) nach Anspruch 1,
wobei das Ausgleichselement (15) ringförmig ausgebildet ist.

3. Ausgleichsspannfutter (1) nach Anspruch 1,
wobei die helixförmigen Gleitflächen für das erste Schieberpaar (17a,c) eine erste Steigung, und für das zweite Schieberpaar (17b,d) eine gegenläufige zweite Steigung aufweisen, die vorzugsweise betragsmäßig gleich der ersten Steigung ist.

4. Ausgleichsspannfutter (1) nach einem der vorstehenden Ansprüche,
wobei die Schieber (17a-d) axial beweglich in dem Gehäuse (3) geführt sind.

5. Ausgleichsspannfutter (1) nach einem der vorstehenden Ansprüche,
wobei die Schieber (17a-d) und die Grundbacken (7a-d) mittels paarweise zentrisch auf die Spannachse (S) zulaufender Gleitflächen (27, 25) miteinander gekoppelt sind, so dass die Bewegung der Schieber in die radiale Bewegung der Grundbacken (7a-d) umgesetzt wird.

6. Ausgleichsspannfutter (1) nach einem der Ansprüche 1 bis 4,
wobei die Schieber (17a-d) erste Schieber sind, und das Ausgleichsspannfutter zwei Paar zweite Schieber (29a,c; 29b,d) aufweist, die jeweils mit einem der ersten Schieber (17a,c; 17b,d) gekoppelt und radial beweglich in dem Gehäuse (3) geführt sind, wobei die Grundbacken jeweils ein Grundbackenelement (31a-d) aufweisen, das jeweils reversibel lösbar an jeweils einem der zweiten Schieber montiert ist.

7. Ausgleichsspannfutter (1) nach Anspruch 6,
wobei die ersten Schieber (17a-d) und die zweiten Schieber (29a-d) mittels paarweise zentrisch auf die Spannachse zu laufender Gleitflächen (27, 25) miteinander gekoppelt sind, so dass die Bewegung der ersten Schieber (17a-d) in die radiale Bewegung der zweiten Schieber (29a-d) umgesetzt wird.

8. Ausgleichsspannfutter (1) nach einem der vorstehenden Ansprüche,
wobei die Schieber, insbesondere die ersten und/oder zweiten Schieber, unabhängig voneinander gleitbeweglich im Gehäuse gelagert sind.

## Claims

1. Compensating clamping chuck (1) having
a housing (3), in which a drive unit (9) with a cable guide (13) which can be moved in the direction of a clamping axis (S) is arranged and
two pairs of diametrically opposed base jaws (7a, c; 7b, d) are arranged, wherein
the base jaws (7a-d) are guided in the housing so as to be able to be moved substantially perpendicularly to the clamping axis (S), preferably radially, and
the drive unit (9) is configured to convert the movement of the cable guide (13) into the movement of the base jaws (7a-d),
wherein the drive unit (9) has two pairs of diametrically opposed sliding members (17a, c; 17b, d), wherein each sliding member (17a-d) is coupled to a base jaw (7a-d) in order to transmit force to the base jaw (7a-d),
wherein the sliding members (17a-d) are coupled to the cable guide (13) by means of a compensation element (15), wherein the compensation element (15) is configured during a rotation-free movement to bring about a synchronous movement of the two sliding member pairs (17a, c; 17b, d), **characterised in that** the compensation element (15) can be rotated about the clamping axis (S) relative to the cable guide (13) and is further configured during a rotational movement relative to the cable guide to bring about a relative movement of the second sliding member pair (17b, d) relative to the first sliding member pair (17a, c),
wherein the compensation element (15) and the sliding members (17a-d) are coupled by means of sliding faces (19-21) which are arranged at the circumference and which extend in a helical manner about the clamping axis (S) and which are formed on the compensation element (15) and/or on the sliding members, and wherein the sliding faces (21) are in the form of helical recesses on the compensation element (15) or the sliding members (17a-d); and/or
wherein the sliding faces are in the form of helical projections (19) on the compensation element or the sliding members.

2. Compensating clamping chuck (1) according to claim 1, wherein the compensation element (15) is constructed in an annular manner.

3. Compensating clamping chuck (1) according to claim 1, wherein the helical sliding faces for the first sliding member pair (17a, c) have a first inclination and for the second sliding member pair (17b, d) an opposing second inclination which is preferably equal in value to the first inclination.

4. Compensating clamping chuck (1) according to any one of the preceding claims,
wherein the sliding members (17a-d) are axially movably guided in the housing (3).

5. Compensating clamping chuck (1) according to any one of the preceding claims,
wherein the sliding members (17a-d) and the base jaws (7a-d) are coupled to each other by means of sliding faces (27, 25) which taper in pairs centrally towards the clamping axis (S) so that the movement of the sliding members is converted into the radial movement of the base jaws (7a-d).

6. Compensating clamping chuck (1) according to any one of claims 1 to 4,
wherein the sliding members (7a-d) are first sliding members, and the compensating clamping chuck has two pairs of second sliding members (29a, c; 29b, d), which are each coupled to one of the first sliding members (17a, c; 17b, d) and which are guided in a radially movable manner in the housing (3), wherein the base jaws each have a base jaw element (31a-d) which is mounted in a reversibly releasable manner on one of the second sliding members in each case.

7. Compensating clamping chuck (1) according to claim 6, wherein the first sliding members (17a-d) and the second sliding members (29a-d) are coupled to each other by means of sliding faces (27, 25) which taper in pairs centrally towards the clamping axis so that the movement of the first sliding members (17a-d) is converted into the radial movement of the second sliding members (29a-d).

8. Compensating clamping chuck (1) according to any one of the preceding claims,
wherein the sliding members, in particular the first and/or second sliding members, are supported independently of each other so as to be able to be slidingly moved in the housing.

## Revendications

1. Mandrin de compensation (1), avec
un boîtier (3), dans lequel est disposée une unité d'entraînement (9) avec une conduite de traction (13) mobile en direction d'un axe de serrage (S), et
deux paires de mâchoires de base (7a, c ; 7b, d) diamétralement opposées l'une à l'autre sont disposées, dans lequel
les mâchoires de base (7a-d) sont guidées de manière mobile dans le boîtier sensiblement perpendiculairement à l'axe de serrage (S), de préférence radialement, et
l'unité d'entraînement (9) est conçue pour convertir le mouvement de la conduite de traction (13) en mouvement des mâchoires de base (7a-d),
dans lequel l'unité d'entraînement (9) présente deux paires de coulisseaux (17a, c ; 17b, d) disposés de manière diamétralement opposée, dans lequel chaque coulisseau (17a-d) est accouplé à une mâchoire de base (7a-d) pour la transmission de force sur la mâchoire de base (7a-d),
dans lequel les coulisseaux (17a-d) sont accouplés à la conduite de traction (13) au moyen d'un élément de compensation (15), dans lequel l'élément de compensation (15) est conçu pour provoquer, lors d'un mouvement exempt de rotation, un mouvement synchrone des deux paires de coulisseaux (17a, c ; 17b, d), **caractérisé en ce que** l'élément de compensation (15) peut être amené en rotation autour de l'axe de serrage (S) par rapport à la conduite de traction (13) et est conçu en outre pour provoquer, lors d'un mouvement rotatif par rapport à la conduite de traction, un mouvement relatif de la deuxième paire de coulisseaux (17b, d) par rapport à la première paire de coulisseaux (17a, c),
dans lequel l'élément de compensation (15) et les coulisseaux (17a-d) sont accouplés au moyen de surfaces de glissement (19, 21) disposées côté périphérie, qui s'étendent de manière hélicoïdale autour de l'axe de serrage (S) et sont réalisées sur l'élément de compensation (15) et/ou sur les coulisseaux, et dans lequel les surfaces de glissement (21) sont réalisées en tant qu'évidements hélicoïdaux sur l'élément de compensation (15) ou les coulisseaux (17a-d) ; et/ou
dans lequel les surfaces de glissement sont réalisées en tant que parties saillantes hélicoïdales (19) sur l'élément de compensation ou les coulisseaux.

2. Mandrin de compensation (1) selon la revendication 1,
dans lequel l'élément de compensation (15) est réalisé de manière annulaire.

3. Mandrin de compensation (1) selon la revendication 1,
dans lequel les surfaces de glissement hélicoïdales présentent, pour la première paire de coulisseaux (17a, c), une première inclinaison, et, pour la deuxième paire de coulisseaux (17b, d), une deuxième inclinaison en sens contraire, qui est de préférence identique à la première inclinaison en termes de valeur.

4. Mandrin de compensation (1) selon l'une quelconque des revendications précédentes,
dans lequel les coulisseaux (17a-d) sont guidés de manière axialement mobile dans le boîtier (3).

5. Mandrin de compensation (1) selon l'une quelconque des revendications précédentes,
dans lequel les coulisseaux (17a-d) et les mâchoires de base (7a-d) sont accouplés les uns aux autres au moyen de surfaces de glissement (27, 25) convergeant par paire de manière centrale vers l'axe de serrage (S), de sorte que le mouvement des coulisseaux est converti en le mouvement radial des mâchoires de base (7a-d).

6. Mandrin de compensation (1) selon l'une quelconque des revendications 1 à 4,
dans lequel les coulisseaux (17a-d) sont des premiers coulisseaux, et le mandrin de compensation présente deux paires de deuxièmes coulisseaux (29a, c ; 29b, d), qui sont accouplés respectivement à l'un des premiers coulisseaux (17a, c ; 17b, d) et guidés de manière radialement mobile dans le boîtier (3), dans lequel les mâchoires de base présentent respectivement un élément de mâchoire de base (31a-d), qui est monté respectivement de manière réversiblement détachable sur respectivement un des deuxièmes coulisseaux.

7. Mandrin de compensation (1) selon la revendication 6,
dans lequel les premiers coulisseaux (17a-d) et les deuxièmes coulisseaux (29a-d) sont accouplés les uns aux autres au moyen de surfaces de glissement (27, 25) convergeant par paire de manière centrale vers l'axe de serrage, de sorte que le mouvement des premiers coulisseaux (17a-d) est converti en le mouvement radial des deuxièmes coulisseaux (29a-d).

8. Mandrin de compensation (1) selon l'une quelconque des revendications précédentes,
dans lequel les coulisseaux, en particulier les premiers et/ou deuxièmes coulisseaux, sont montés dans le boîtier de manière mobile par glissement indépendamment les uns des autres.
